Europäisches Patentamt

European Patent Office

Office européen des brevets

(11) Publication number: **0 420 052 A2**

# EUROPEAN PATENT APPLICATION

(21) Application number: **90118143.8**

(22) Date of filing: **20.09.90**

(51) Int. Cl.5: **A21B 3/15, F24C 15/16**

(30) Priority: **29.09.89 US 414407**

(43) Date of publication of application:
**03.04.91 Bulletin 91/14**

(84) Designated Contracting States:
**CH DE IT LI**

(71) Applicant: **WILTON ENTERPRISES, INC.**
**2240 West 75th Street**
**Woodridge, Illinois 60517(US)**

(72) Inventor: **DeAre, David W.**
**306 Linden**
**Glen Ellyn, Illinois 60137(US)**

(74) Representative: **Baillie, Iain Cameron**
**c/o Ladas & Parry Isartorplatz 5**
**W-8000 München 2(DE)**

(54) **Cooking utensil.**

(57) A cooking utensil including a top wall defining a cooking surface and a bottom wall fixed in spaced relationship with the top wall. An open space is defined therebetween for insulating purposes, and the top and bottom walls are interconnected for maintaining the spaced relationship. A plurality of drain holes are defined in at least one of the walls so that any liquids which might collect in the open space can be removed.

FIG-1

EP 0 420 052 A2

## BACKGROUND OF THE INVENTION

This invention relates to a cooking utensil which may comprise a cookie sheet or similar structure for baking purposes. The subsequent description will make particular reference to a cookie sheet; however, it will be understood that the concepts of the invention are applicable to utensils used for purposes other than baking and having upstanding walls or other configurations different than a cookie sheet.

The cooking utensil of this invention particularly includes means for insulating a cooking surface to avoid burning or other damage to the food being cooked which can result from non-uniform application of heat. In particular, the invention relates to a cooking utensil having a cooking surface defined on a top wall with a bottom wall being spaced from the top wall. This results in an insulating space defined between the respective walls for achieving more uniform cooking results.

Examples of utensils which include spaced top and bottom walls are found in Kussa, et al. Patent No. 1,749,433; Burlingham Patent No. 1,361,364; Scurlock Patent No. 2,151,535; Racz Patent No. 3,934,748; and Logan, et al. Patent Nos. 4,489,852 and 4,595,120.

The Logan, et al. patents describe insulated cooking utensils including a cookie sheet which define top and bottom walls and which have these walls secured together at the peripheries thereof. The securing means particularly comprises the provision of a flange defined by the bottom wall which is received within a reverse bend portion defined by the top wall.

Although a structure of the type described by Logan, et al. may be intended to exclude the possibility of water and/or detergents from entering the space defined between top and bottom walls, this is not necessarily achievable. In particular, after some use, thermal conditions can lead to the formation of gaps which would permit entry of liquids during washing of the utensil. During a subsequent use of the utensil, a dangerous situation can result as the liquids vaporize and high pressure conditions develop.

## Summary Of The Invention

In accordance with this invention, a cooking utensil is provided having top and bottom walls secured at the peripheries thereof. These walls are spaced apart so that an insulating space is defined between the walls.

In order to insure against the collection of liquids in the space between the walls, and to avoid dangerous conditions which can result from the presence of such liquids, drain holes are provided. The invention particularly contemplates the location of drain holes along at least one edge of the utensil, preferably in a peripheral area. After washing of the utensil, liquids can be readily drained so that the presence of the liquids in the insulating space can be avoided during subsequent use of the utensil.

## Brief Description of The Drawings

Figure 1 comprises a perspective view of a cookie sheet characterized by the features of this invention;

Figure 2 is a top plan view of the cookie sheet;

Figure 3 is a bottom plan view of the cookie sheet;

Figure 4 is a side elevation of the top wall of the cookie sheet;

Figure 5 is a cross-sectional view of the bottom wall;

Figure 6 is a cross-sectional view of the assembled cookie sheet taken about the line 6-6 of Figure 3; and

Figure 6A is an enlarged fragmentary cross-sectional view of the cookie sheet illustrating a drain hole.

## Detailed Description Of The Preferred Embodiment

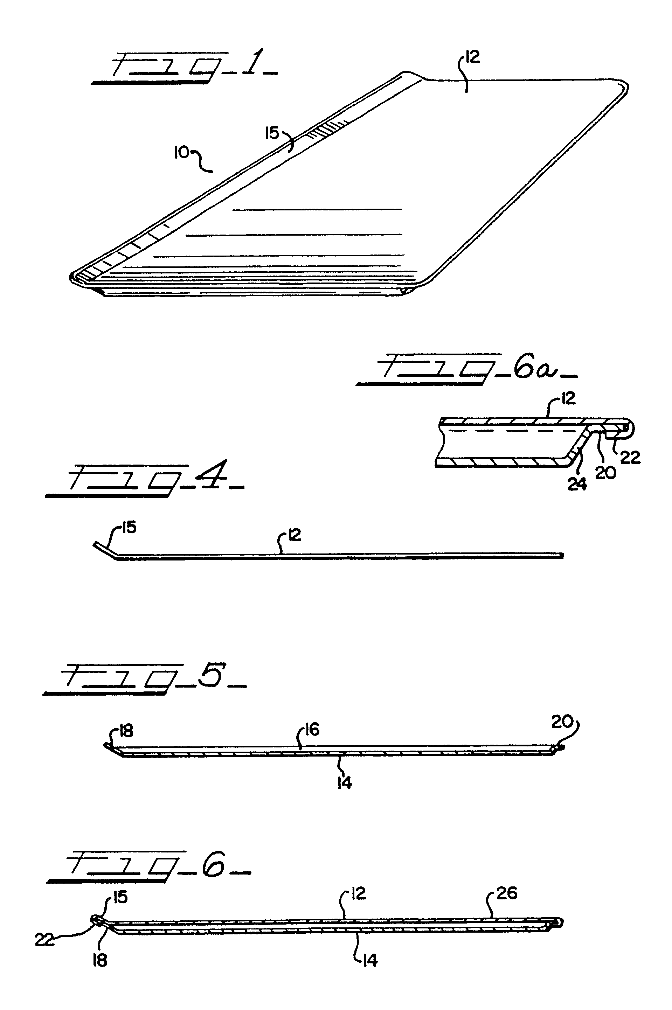

The cookie sheet 10 shown in Figure 1 comprises a top wall 12 which forms the cooking surface. As is typical of a product of this type, a flange portion 15 extends upwardly and outwardly along an edge of this top wall to provide a convenient gripping means for facilitating use of the sheet.

A bottom wall 14 is employed in conjunction with the top wall. This bottom wall includes a bevel portion 16 around the periphery thereof whereby a dish-shaped configuration is achieved. An outwardly and upwardly extending flange portion 18 is defined along one edge to conform with the flange portion 15 of the top wall. The remainder of the bottom wall periphery defines a flange portion 20 which extends outwardly in parallel relationship with the bottom surface of the bottom wall.

As shown in Figure 6 and as shown in detail in Figure 6A, the top wall including the flange portion 15 is provided with a reverse bend portion 22 to achieve securing of the top wall to the bottom wall. The respective flanges 15 and 18 are dimensioned such that after formation of the reverse bend portion, the gripping means is still provided along one edge of the cookie sheet.

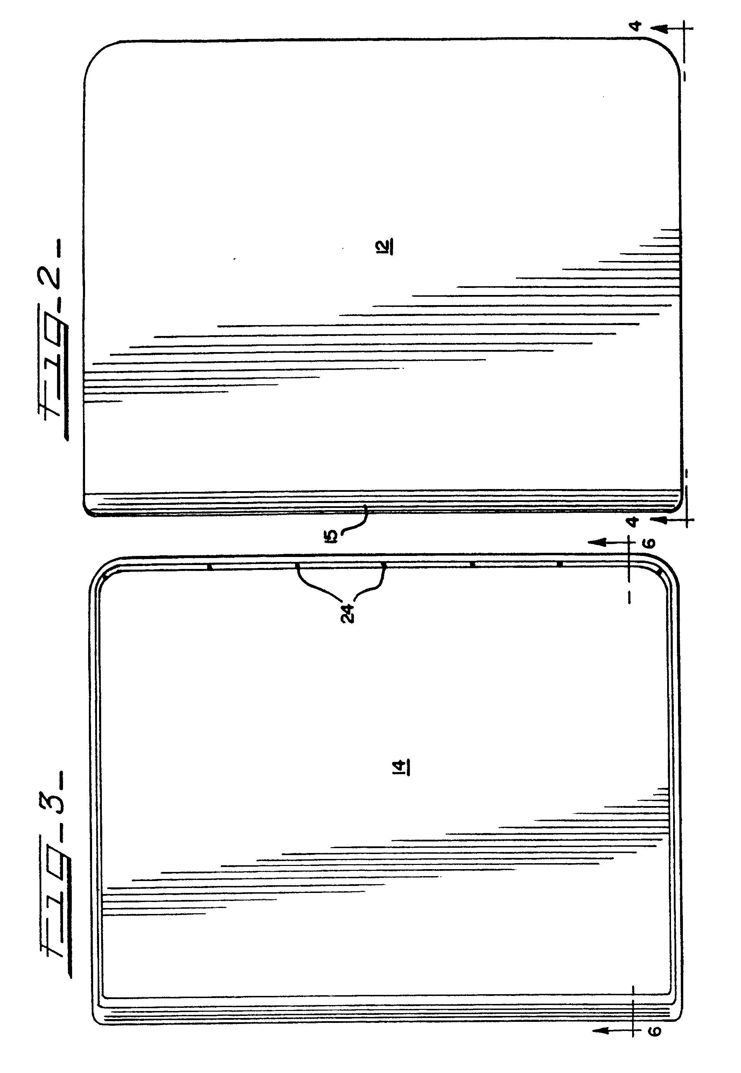

Figure 6A also illustrates a drain hole 24 formed in the bevel portion 16 of the bottom wall 14. As shown in Figure 3, a plurality of such drain holes is provided along one edge of the cookie sheet.

In the use of the cookie sheet, it is expected that liquids such as water and detergent fluids will enter the insulating space 26 defined between the top and bottom walls. Prior to a subsequent use of the cookie sheet, the water and fluids can be completely drained to thereby avoid the presence of such material under conditions where the material would vaporize creating possibly dangerous conditions during a cooking operation.

The preferred form of the invention shown in the drawings provides for the location of the drain holes along the edge of the cookie sheet opposite the edge defining the gripping means. Also in accordance with a preferred form of the invention, the drain holes are 2-1/2 inches apart and have a diameter of .186 inches. The diameter may vary form about 1/8 to 1/4 inch and the spacing between the holes may vary between about 1-1/2 and 3-1/2 inches.

It will be appreciated that the concepts of the invention can be readily applied to other types of cooking utensils, for example having the shape as described in the aforementioned Kussa, et al. patent. Similarly, it will be appreciated that the dimensions and locations of drain holes may vary depending upon the particular application of the invention.

## Claims

1. In a cooking utensil comprising a top wall defining a cooking surface, a bottom wall fixed in spaced relationship with the top wall for defining an open space therebetween, and means interconnecting the top and bottom walls for maintaining the spaced relationship, the improvement comprising a plurality of drain holes defined in at least one of said walls whereby liquids collecting in said open space can be removed.

2. A utensil in accordance with Claim 1 wherein said lower wall defines a peripheral flange and said upper wall defines a reverse bend portion receiving said flange for thereby securing said upper and lower walls together, said drain holes being positioned adjacent said reverse bend.

3. A utensil in accordance with Claim 2 wherein said drain holes are defined by said bottom wall in the portion thereof adjacent said flange.

4. A utensil in accordance with Claim 3 wherein said bottom wall defines a bevel portion adjacent said flanges, said drain holes being defined by said bevel portion.

5. A utensil in accordance with Claim 4 wherein said drain holes are aligned along one side edge of the utensil.

6. A utensil in accordance with Claim 5 wherein said drain holes are from about 1/8 to 1/4 inch in diameter.

7. A utensil in accordance with Claim 5 wherein said drain holes are spaced about 1-1/2 to 3-1/2 inches apart.

_Fig_1_

10

15

12

_Fig_6a_

12

24  20  22

_Fig_4_

15  12

_Fig_5_

18  16  20

14

_Fig_6_

15  12  26

22

18  14

4

EP 0 420 052 A2

_Fig_3_

_Fig_2_

24

15

14

12

4

6

6

4